# EUROPEAN PATENT APPLICATION

(11) **EP 1 621 860 A1**
(43) Date of publication of application: **01.02.2006**
(21) Application number: 04425576.8
(22) Date of filing: 29.07.2004
(51) Int. Cl.: G01L 9/10

(54) **Pressure sensor**

(71) Applicant: SIGNAL LUX MDS S.r.l., 20122 Milano (IT)
(72) Inventor: Coppola, Antonio, 22078 Turate (CO) (IT)
(74) Representative: Tansini, Elio Fabrizio

(57) **Abstract**

It is disclosed a pressure sensor comprising a box-shaped body (2) having at least one first connection (3) for a conveying pipe of a fluid under pressure, at least one movable element (5) adapted to internally divide the box-shaped body (2) into two chambers comprising a first chamber (6) designed to receive the fluid under pressure through said connection (3) and a second chamber (7) opposite to the first chamber, and means for measuring the position of the movable element (5) that is variable in relation to the fluid-pressure value. The measuring means (8) comprises at least one primary electric conductor (9) and one secondary electric conductor (10) disposed at a mutual distance depending on the position of the movable element (5), an electric-signal generator (11) connected to the primary conductor (9) and adapted to establish phenomena of electromagnetic induction between said primary conductor and the secondary conductor (10), and at least one device (13) for detecting the width of the electric signals present in at least one of the conductors.

## Description

The present invention relates to a pressure sensor, particularly for household appliances, such as appliances equipped with boilers.

It is known that pressure sensors, in particular for applications of the above mentioned type in which a precise control of the physical parameters of the produced steam is required, generally comprise a box-shaped body having at least one connection for a fluid-conveying pipe, pressure of which needs to be measured.

The box-shaped body is internally divided by a movable or deformable element usually consisting of a flexible diaphragm, into a first chamber designed to receive the fluid under pressure and a second chamber opposite to the first chamber.

The position of the movable element, i.e. the bending amount of the diaphragm, that is variable in connection with the fluid-pressure value, is detected by suitable measurement means capable of supplying output signals that can be directly converted into pressure values.

In the known art these measurement means consists of transducers based on different operating principles.

For example, a first known type of transducer uses as the component responsive to pressure, a pair of parallel plate-like elements forming the plates of a condenser. One of the two plate-like elements is integral with a diaphragm that bends depending on pressure changes. The other plate-like element is connected to a rigid ceramic support. An integrated circuit measures the condenser capacity and converts it into voltages that are linearly proportional to pressure.

Other types of transducers used in the known art as means for measuring the position of the movable element, and therefore the pressure to which said movable element is submitted, are based on use of piezoelectric materials or measurement of the variation of a magnetic field, founded on the physical phenomenon known as "Hall effect", for example.

Pressure sensors briefly described above have many limits and drawbacks.

In fact, first of all, costs required for producing said sensors are rather high above all with reference to applications for household appliances for which maximum saving in costs for all components forming them is required, as they are produced on a large scale.

In addition; pressure sensors of known type have not a particularly high sensitivity, are negatively affected by temperature during measurements and are subjected to interferences due to also stationary magnetic and/or electric fields.

Under this situation, the technical task underlying the present invention is to devise a pressure sensor capable of obviating the mentioned drawbacks.

Within the scope of this technical task, it is an important aim of the present invention to devise a pressure sensor of low production cost and high operating reliability.

Another important aim of the invention is to devise a pressure sensor capable of detecting even very small variations in this physical magnitude, in the order of one hundred of Pascal, for example.

A still further aim is to make available a pressure sensor weakly sensitive to, or fully unaffected by environmental factors such as temperature and magnetic and/or electric fields.

The technical task mentioned and the aims specified are substantially achieved by a pressure sensor that is characterised in that it comprises one or more of the technical solutions hereinafter claimed.

Description of some preferred but not exclusive embodiments of a pressure sensor in accordance with the invention are set out hereinafter by way of nonlimiting example, with reference to the accompanying drawings, in which:
- Fig. 1 is a perspective view partly in section of a first embodiment of a pressure sensor in accordance with the present invention;
- Fig. 2 is a perspective view partly in section of a second embodiment of a pressure sensor in accordance with the present invention;
- Fig. 3 shows a third embodiment illustrated in the same way;
- Fig. 4 shows a fourth embodiment illustrated in the same way;
- Fig. 5 represents a fifth embodiment illustrated in the same way; and
- Fig. 6 represents a block diagram of a pressure sensor in accordance with the present invention;
- Fig. 7 shows a first alternative form of the fifth embodiment seen in Fig. 5; and
- Fig. 8 shows a second alternative form of the fifth embodiment seen in Fig. 5.

With reference to the drawings, a pressure sensor in accordance with the invention has been generally allocated reference numeral 1.

It comprises a box-shaped body 2 formed of two halves 2a and 2b which are coupled with each other by means of snap-fitting portions or other connecting means.

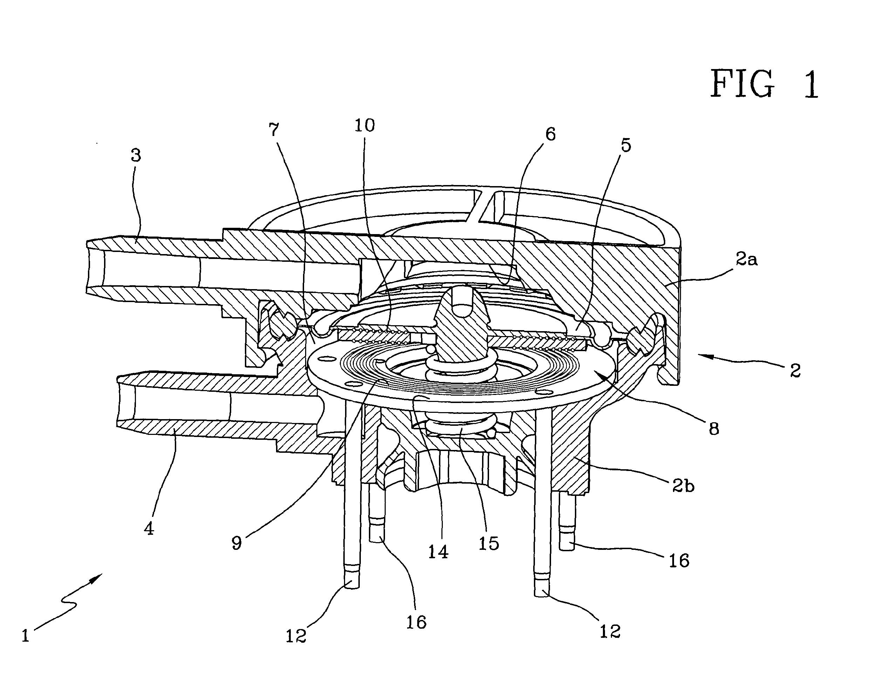

Half 2a laterally has a first connection 3 for a conveying pipe of a fluid, pressure of which is required to be measured. Half 2b in the embodiments shown in Figs. 1 to 4 has a second connection 4 for a duct to be brought into communication with the surrounding atmosphere, for example.

The box-shaped body 2 is divided by a movable element 5 into two chambers, i.e. a first chamber 6 designed to receive a fluid under pressure and a second chamber 7 opposite to the first one.

The position of the movable element 5 that is variable in relation to the fluid-pressure value, is detected by measurement means 8. Advantageously, said means comprises a primary electric conductor 9 and a secondary electric conductor 10 disposed at a mutual distance depending on the position of the movable element 5.

An electric-signal generator 11 is connected to the primary conductor 9, by suitable electric connection plugs 12 and is adapted to establish phenomena of mutual electromagnetic induction between the primary conductor 9 and secondary conductor 10.

Practically, generator 11 supplies a variable current to the primary conductor 9 which, in turn, generates a variable magnetic field causing creation of an induced current in the secondary conductor 10 by effect of known electromagnetic-induction phenomena. The intensity of the induced current depends on the shape of the circuits and increases as the distance between the circuits becomes smaller. In other words, the closer the secondary conductor is to the primary conductor, the greater the number of force lines impinging on it that belong to the magnetic field created by said primary conductor.

Clearly, also the current induced on the secondary conductor 10 generates a magnetic field impinging on the primary conductor 9 and generating an induced current therein. In the just described example of mutual induction, the intensity of the induced current in the primary conductor 9 will surely be lower than the intensity of the induced current in the secondary conductor 10.

The electric signals present in the primary conductor or the secondary conductor that, due to what described above, are correlated with the mutual position of said conductors and indirectly with the pressure that is wished to be measured, are measured by a suitable device 13 detecting the amplitude of an electric signal.

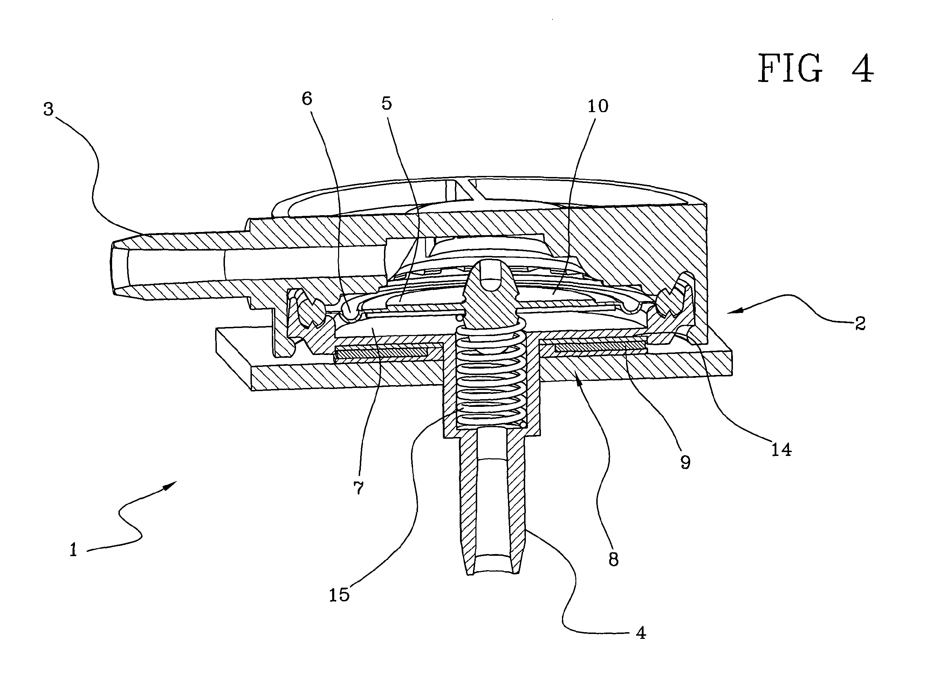

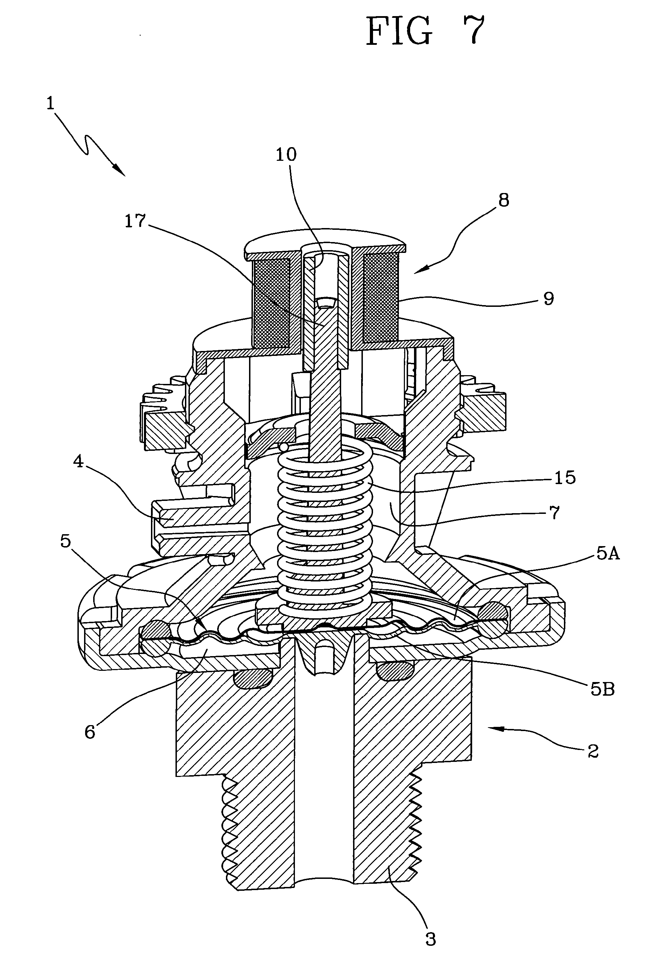

The primary conductor 9 defined by a first coil winding (Figs. 4 and 7) or advantageously consisting of an electric wire spirally wound arond a plate-like support 14 (Figs. 1, 2, 3 and 5) is integral with the box-shaped body 2 and therefore is completely stationary on changing of the fluid pressure. On the contrary, the secondary conductor 10 is rigidly connected to the movable element 5 and therefore follows displacements of the latter.

Preferably, the movable element 5 is defined by a diaphragm made of an elastically deformable material and adapted to at least partly bend in response to pressure variations in the fluid present in the first chamber 6.

To enable diaphragm 5 to have a high sensitivity in pressure measurement, said diaphragm has a high elastic deformability and is associated with a spring 15 adapted to exert an elastic action thereon counteracting the force generated on the diaphragm itself by the fluid under pressure. Spring 15 is interposed between the diaphragm 5 and the box-shaped body 2.

In a first embodiment of sensor 1 shown in Fig. 1, the secondary conductor 10 consists of a second coil winding also having a spiral shape. Preferably, the detecting device 13 identifies the amplitude of the induced electric signals present in the second winding and sent to the detecting device 13 through connecting plugs 16. It is to be noted that the detecting device 13 can also be connected to the primary conductor 9 so that it can detect the current induced by the secondary conductor 10 on the primary conductor 9. However, as said, in the preferred embodiment, the detecting device 13 is connected to the secondary conductor 10 and detects the current induced by the primary conductor 9 on the secondary conductor 10.

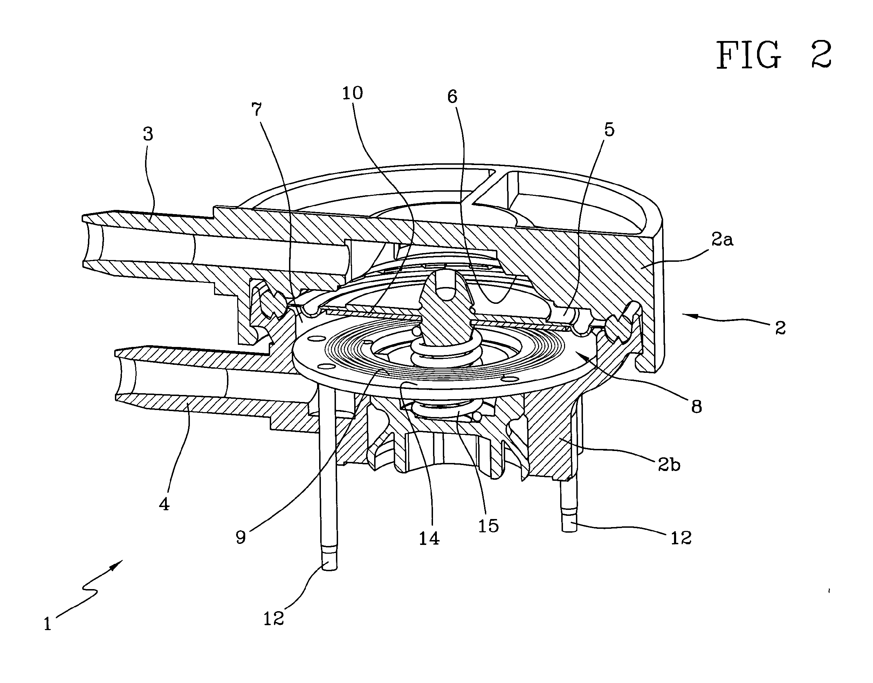

In other embodiments shown in Figs. 2 to 5 the secondary conductor 10 is defined by a metal disk electrically behaving like a short circuit in which the currents induced by the primary conductor, of a molecular character, are known in the scientific literature as "eddy currents".

In the last-mentioned embodiments, the signals measured by the detecting device 13 are no longer identified on the secondary conductor 10 that, as said, is made up of the disk, but are those present in the primary conductor 9. More specifically, generation of eddy currents in disk 10 causes a power consumption that appears as a reduction in the current intensity of the primary winding 9. The smaller the distance of the disk from the primary winding 9 is, the greater the power consumption and therefore the smaller the signal amplitude that can be found on the primary winding 9 itself.

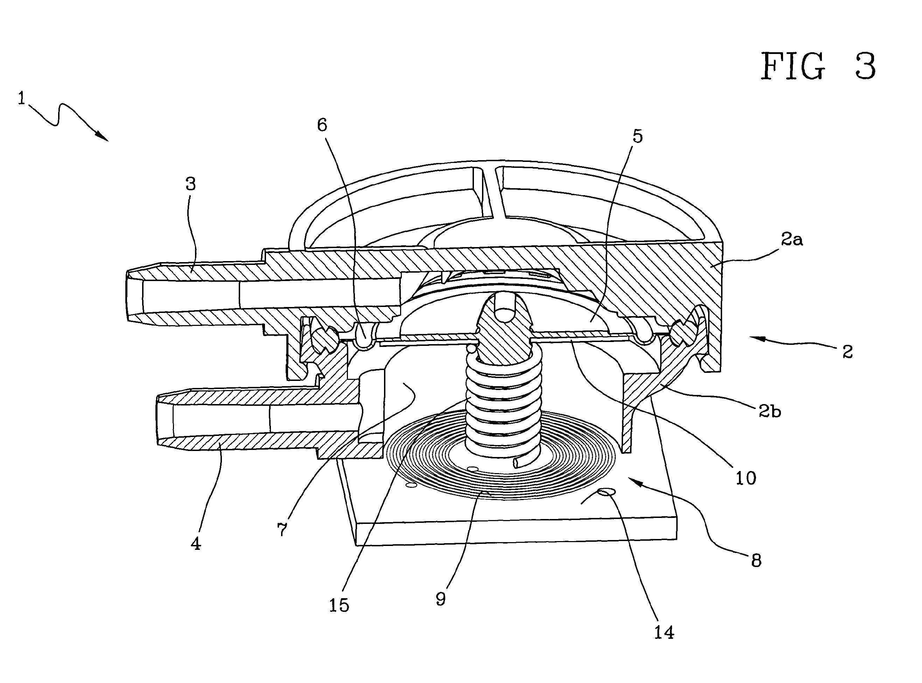

The position of the plate-like support 14 with which the primary winding 9 is associated can be at the inside of the second chamber 7, as in the first and second embodiments illustrated in Figs. 1 and 2, respectively. Alternatively, the position of the plate-like support 14 can be at the outside of said second chamber 7, as shown in Fig. 4. Furthermore, the plate-like support 14 can take a position adapted to define a closing wall of said chamber 7, as shown in Fig. 3.

In addition, disk 10 too which constitutes the secondary conductor, can be placed at different positions.

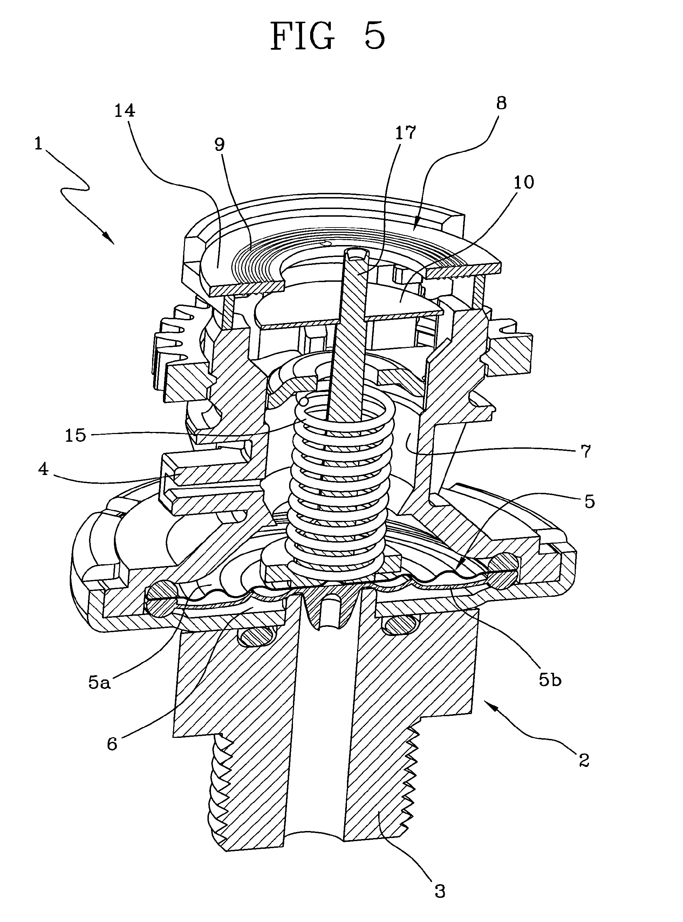

For example, as illustrated in the embodiments visible in Figs. 2-4, the disk 10 is directly engaged on the movable diaphragm 5. Alternatively, as shown in the embodiment in Fig. 5, disk 10 is rigidly connected to a rod-like support element 17 integral at one end with the movable diaphragm 5 and jutting out in the second chamber 7. In the last-mentioned embodiment, the movable element or diaphragm 5 is made up of a first flexible membrane 5a of metal material and a second flexible membrane 5b of rubber material superimposed on the first one, on the side of the first chamber 6. The second membrane 5b performs the function of protecting the first membrane 5a from oxidation or other types of deterioration.

In accordance with a first alternative form (Fig. 7) of the fifth embodiment shown in Fig. 5, the primary conductor 9 consists of an axial coil and the disk is replaced by a metal cylinder 10 preferably of nickel-plated iron, mounted on the rod-like support 17 and axially slidable within coil 9. This solution offers more accuracy than flat coils, because in the competence region of the metal cylinder 10 there is a greater concentration of the flux lines.

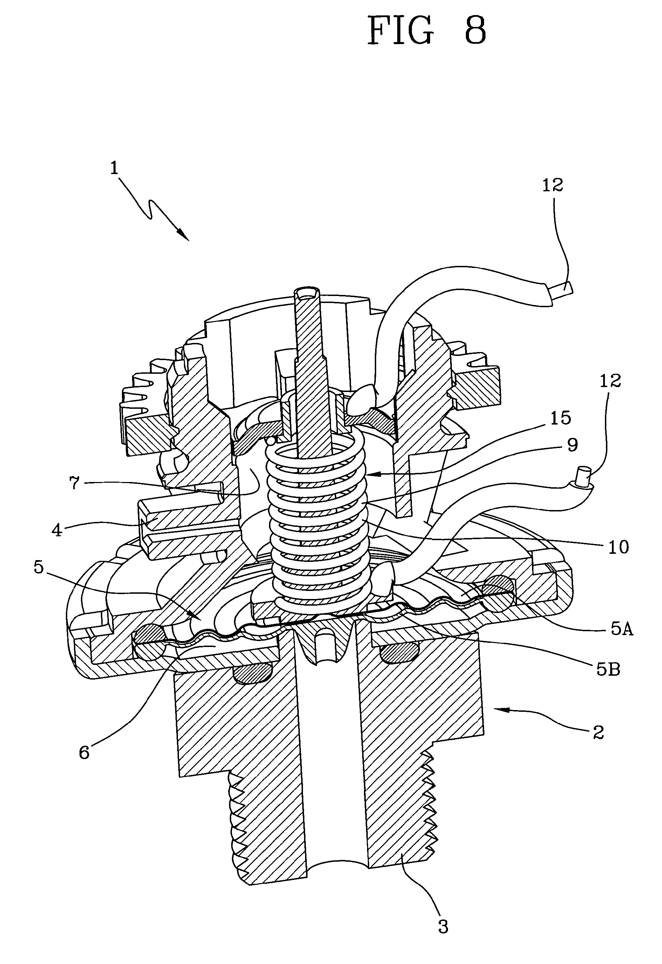

In accordance with a second alternative form (Fig. 8) of the fifth embodiment shown in Fig. 5, the primary 9 and secondary 10 electric conductors are defined by the coils of spring 15 that, by moving close to and away from each other depending on pressure, establish phenomena of mutual electromagnetic induction between the coils themselves. In fact, the inductance of the solenoid made up of spring 15 varies on varying of the length thereof. For the purpose, spring 15 is electrically connected, at its ends and by means of terminals 12, to the electric-signal generator and the amplitude-detecting device 13.

Advantageously, use of spring 15 as the solenoid, with the same function as the primary electric conductor 9 and secondary electric conductor 10, can also be provided in combination with the structures illustrated in Figs. 1 to 4, instead of coils of the classic type, spiral flat coils and metal disks.

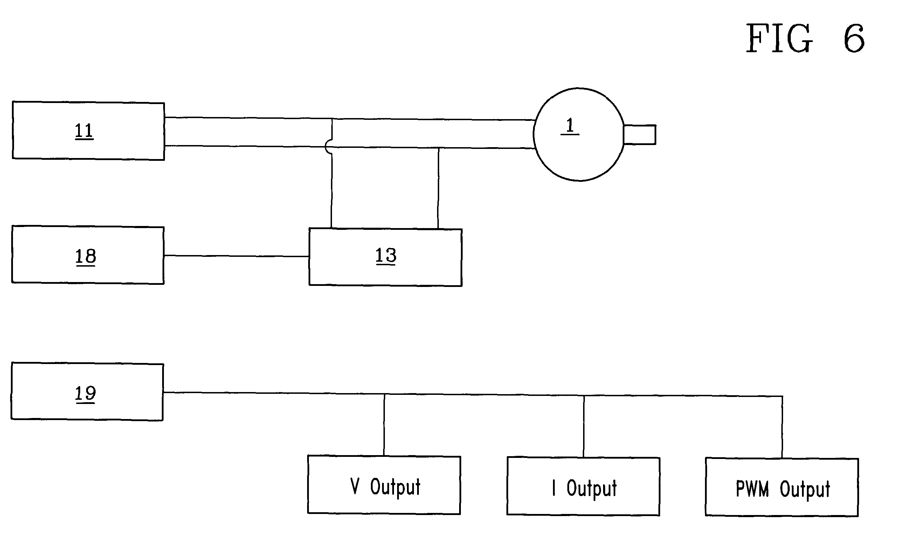

Finally, in all the above described embodiments of the pressure sensor, a unit 18 for signal linearization 18 disposed downstream of the detecting device 14, and a converter 19 are provided. Said converter is disposed downstream of the linearization unit 18 and is adapted to selectively output voltage signals "V, current signals "I" and pulse width modulated signals "PWM" (Fig. 6).

The invention achieves important advantages.

In fact, the sensor being the object of the present invention has a rather simple structure the production cost of which is undoubtedly lower than that of sensors of known type.

In addition, the operating principle based on electromagnetic-induction phenomena allows a high sensitivity in pressure measurements to be obtained together with a weak risk of being affected by ambient factors such as temperature.

It will be finally appreciated that the pressure sensor in accordance with the present invention is made up of a small number of components having a good structural solidity giving said sensor a high and durable level of reliability in operation.

## Claims

1. A pressure sensor comprising:
- a box-shaped body (2) having at least one connection (3) for a conveying duct of a fluid under pressure;
- at least one movable element (5) adapted to internally divide said box-shaped body (2) into a first chamber (6) designed to receive the fluid under pressure through said connection (3) and a second chamber (7) opposite to said first chamber;
- means for measuring the position of said movable element (5), which position is a function of the fluid pressure;
**characterised in that** said measuring means (8) comprises:
- at least one primary electric conductor (9) and at least one secondary electric conductor (10) disposed at a mutual distance depending on the position of said movable element (5);
- a generator of electric signals (11) connected at least with the primary conductor (9) to generate phenomena of mutual electromagnetic induction between the primary conductor (9) and secondary conductor (10);
- at least one detecting device (13) for measuring the width of the electric signals in at least one of said conductors.

2. A sensor as claimed in claim 1, **characterised in that** said detecting device (13) is adapted to detect electric signals induced in said secondary conductor (10) by said primary electric conductor (9).

3. A sensor as claimed in claim 1, **characterised in that** said detecting device (13) is adapted to detect electric signals induced in said primary conductor (9) by said secondary electric conductor (10).

4. A sensor as claimed in one of claims 1 to 3, **characterised in that** said primary electric conductor (9) is integral with said box-shaped body (2) and said secondary electric conductor (10) is rigidly connected to said movable element (5).

5. A sensor as claimed in one of claims 1 to 4, **characterised in that** said primary electric conductor (9) is defined by a first coil winding.

6. A sensor as claimed in one of claims 1 to 4, **characterised in that** the primary electric conductor (9) is made up of an electric wire spirally wound on a plate-like support (14).

7. A sensor as claimed in one of claims 1 to 6, **characterised in that** said secondary electric conductor (10) is defined by a second winding.

8. A sensor as claimed in claim 3, **characterised in that** said secondary electric conductor (10) is defined by a metal disk.

9. A sensor as claimed in claim 1, **characterised in that** it further comprises:
- at least one unit (18) for signal linearization disposed downstream of said detecting device (13);
- and at least one converter (19) disposed downstream of said linearization unit (18) to selectively output voltage signals, current signals, pulse width modulated signals.

10. A sensor as claimed in claim 1, **characterised in that** said movable element (5) is defined by at least one diaphragm that is elastically deformable in response to pressure variations in the fluid present in said first chamber (6).

11. A sensor as claimed in claim 1, **characterised in that** it comprises at least one spring (15) to exert an elastic action on said movable element (5) in the opposite direction relative to the direction of the force generated on the movable element (5) itself by the fluid under pressure.

12. A sensor as claimed in claim 6, **characterised in that** said plate-like support (14) with which said first coil winding is associated is disposed internally of said second chamber (7) of the box-shaped body (2).

13. A sensor as claimed in claim 6, **characterised in that** said plate-like support (14) with which said first coil winding (9) is associated is disposed externally of said second chamber (7) of the box-shaped body (2).

14. A sensor as claimed in claim 8, **characterised in that** it comprises a rod-like support element (17) integral with said movable element (5) and jutting out internally of said second chamber (7), and **in that** said metal disk (10) is rigidly connected to said support element (17), and said first coil winding (9) is disposed so as to close said second chamber (7).

15. A sensor as claimed in claim 10, **characterised in that** said diaphragm (5) is made up of a first flexible membrane of metal material (5a) and a second flexible membrane of rubber material (5b) superimposed on the first membrane on the side of said first chamber (6).
